# FASCICULE DE BREVET EUROPEEN

(11) **EP 1 907 899 B1**
(45) Date de publication et mention de la délivrance du brevet: **10.12.2008**
(21) Numéro de dépôt: 06808196.7
(22) Date de dépôt: 22.09.2006
(51) Int. Cl.: G02C 5/22, G02C 5/14

(54) **LUNETTES DU TYPE A BRANCHES INTERCHANGEABLES**
BRILLEN MIT AUSTAUSCHBAREN BÜGELN
SPECTACLES WITH INTERCHANGEABLE TEMPLES

(30) Priorité: 11.10.2005 FR 0510622
(43) Date de publication de la demande: 09.04.2008
(73) Titulaire: Oxibis Exalto SAS, 39400 Morbier (FR)
(72) Inventeur: PANISSET, Claude, 39400 Morbier (FR)
(74) Mandataire: Bentz, Jean-Paul
(86) Numéro de dépôt international: PCT/FR2006/002178
(87) Numéro de publication internationale: WO 2007/042633

(56) Documents cités:
- FR-A- 1 037 166
- GB-A- 734 208
- US-A- 4 153 347
- US-A- 5 980 039
- US-A- 6 050 686

## Description

La présente invention concerne des lunettes du type constituées par une façade optique ou solaire, soutenue ou non par une monture, et comprenant deux branchés interchangeables, chacune de celles-ci étant reliée à la façade ou à la monture par l'intermédiaire d'un tenon et d'une articulation associée.

Généralement et de manière connue, l'axe d'articulation des branches de lunettes est constitué par une vis réunissant entre elles les deux parties d'une charnière constituant l'articulation.

Mais un problème bien connu des opticiens réside dans le fait que cette vis constituant l'axe de l'articulation se desserre très souvent, et il est donc indispensable de la resserrer, quand ce desserrage ne se traduit pas par la perte de la branche concernée.

Ce problème est d'autant plus sensible lorsqu'on veut rendre les branches interchangeables facilement, sans pour autant que l'utilisateur ne soit obligé de s'adresser à un spécialiste, mais au contraire qu'il puisse effectuer le changement de branches par lui-même.

Un autre exemple de lunettes du type consituées par une façade optique et comprenant deux branches interchangeables est présenté dans le document US-A-4153347.

La présente invention a pour but de remédier à l'ensemble de ces inconvénients et concerne à cet effet des lunettes du type constituées par une façade optique ou solaire, soutenue ou non par une monture, telles que définies par la revendication 1.

De telles lunettes selon l'invention permettent de cumuler un certain nombre d'avantages, à savoir : la suppression des vis, donc plus de dévissage passible la possibilité de réaliser par moulage d'une matière plastique chacune des parties de l'articulation, donc sans pièce intermédiaire ; le montage et le démontage de la branche par simple geste manuel sans outil ; l'interchangeabilité des branches à l'infini, selon toutes combinaisons de couleurs et de formes au gré de l'utilisateur.

L'invention concerne également les caractéristiques qui ressortiront au cours de la description qui va suivre, et qui devront être considérées isolément ou selon toutes leurs combinaisons techniques possibles.

Cette description donnée à titre d'exemple non limitatif, fera mieux comprendre comment l'invention peut être réalisée en référence aux dessins annexés sur lesquels:
La figure 1 représente en perspective une paire de lunettes constituée d'une façade entourée du moins partiellement d'une monture et de deux branches latérales reliées entre elles par une articulation selon un premier exemple de réalisation de l'invention.
La figure 2 est une vue de détails à échelle agrandie de l'articulation selon la figure 1.
La figure 3 représente, à échelle agrandie, une portion de lunettes dites percées dans sa zone d'articulation correspondant à une extrémité de la façade, et à une extrémité d'une branche correspondante, avant montage de l'une dans l'autre.
La figure 4 représente une zone d'articulation de lunettes selon la figure 3, dans une position de présentation de la branche sur le tenon, avant encliquetage.
La figure 5 représente une zone d'articulation de lunettes selon la figure 4, après encliquetage de la branche sur le tenon.
La figure 6 est une vue d'une articulation selon les figures précédentes, après encliquetage de la branche, et en position ouverte de celle-ci.
La figure 7 est une vue d'une articulation selon les figures précédentes, après encliquetage de la branche, et en position de fermeture de celle-ci.

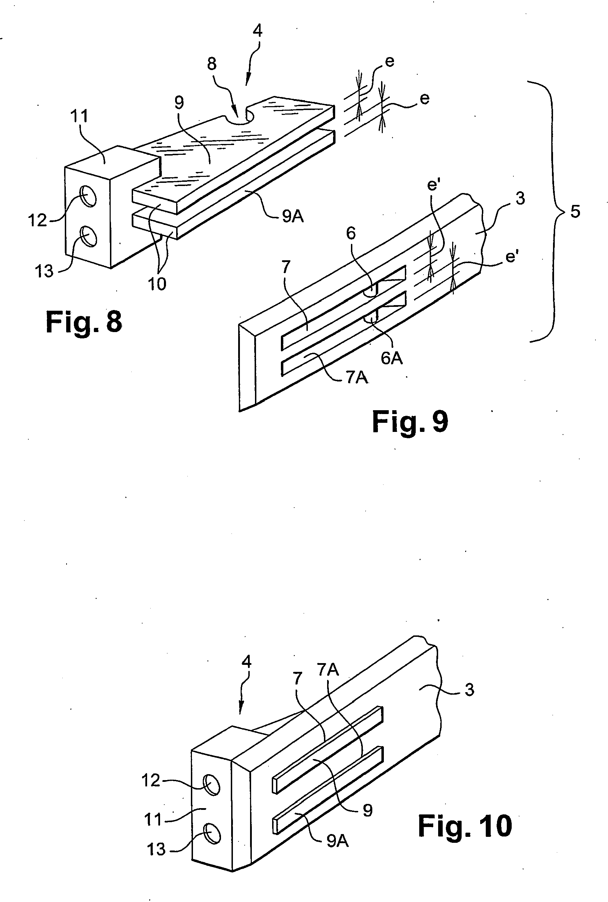

La figure 8 est une vue en perspective d'un tenon d'une articulation selon l'invention.
La figure 9 est une vue en perspective de l'extrémité d'une branche constituant la zone d'articulation complémentaire du tenon selon la figure 8.
La figure 10 est une vue en perspective d'une articulation assemblée comportant un tenon selon la figure 8 et une extrémité de branche selon la figure 9.

Les lunettes 1 globalement désignées sur les figures sont constituées par une façade optique ou solaire 2, soutenue ou non par une monture, et comprenant deux branches interchangeables 3, chacune de celles-ci étant reliée à la façade 2 ou à la monture 16 par l'intermédiaire d'un tenon 4 et d'une articulation associée 5.

Selon l'invention, l'articulation 5 de chacune des branches 3 est constituée par deux axes 6, 6A, disposés transversalement dans deux lumières longitudinales correspondantes 7, 7A ménagées à une extrémité d'une branche libre 3, lesquels axes 6, 6A sont susceptibles d'être encliquetés dans deux encoches 8, 8A, déformables élastiquement, réalisées sur deux plots 9, 9A issu du tenon 4, de forme et de dimensions sensiblement correspondantes à celles des lumières de la branche 3. De cette manière est obtenu un glissement des plots 9, 9A du tenon 4 dans les lumières 7, 7A de la branche 3, et on assure, complémentairement à l'axe d'articulation 6, 6A proprement dit, le guidage de la branche 3 au cours de sa rotation ainsi que son maintien en position stable lorsqu'elle est dépliée, afin d'obtenir une articulation sans vis rendant les branches aisément interchangeables.

Bien entendu, l'inverse est également vrai et possible, c'est-à-dire que la lumière 7 pourrait très bien être réalisée sur le tenon 4 et les plots 9 sur la branche 3.

L'articulation 5 de chacune des branches 3 est constituée par deux axes transversaux 6, 6A disposés dans le même alignement, dans deux lumières longitudinales correspondantes 7, 7A, identiques et parallèles entre elles, réalisées sur la branche 3, lesquels axes 6, 6A s'encliquettent élastiquement dans deux encoches 5, 5A réalisées sur deux plots de guidage 9, 9A identiques et parallèles entre eux, issus, du tenon 4, de forme et de dimensions sensiblement correspondantes à celles des deux lumières 7, 7A de la branche 3 dans lesquelles elles coulissent.

Selon le présent mode de réalisation, cité à titre d'exemple, les plots de guidage 9, 9A du tenon 4 et les lumières correspondantes 7, 7A des branches 3 sont des parallélépipèdes rectangles dont les dimensions, notamment leurs épaisseurs respectives « e », « e' », ont des valeurs sensiblement égales, avec une tolérance de fabrication telle à obtenir un serrage dit « gras ».

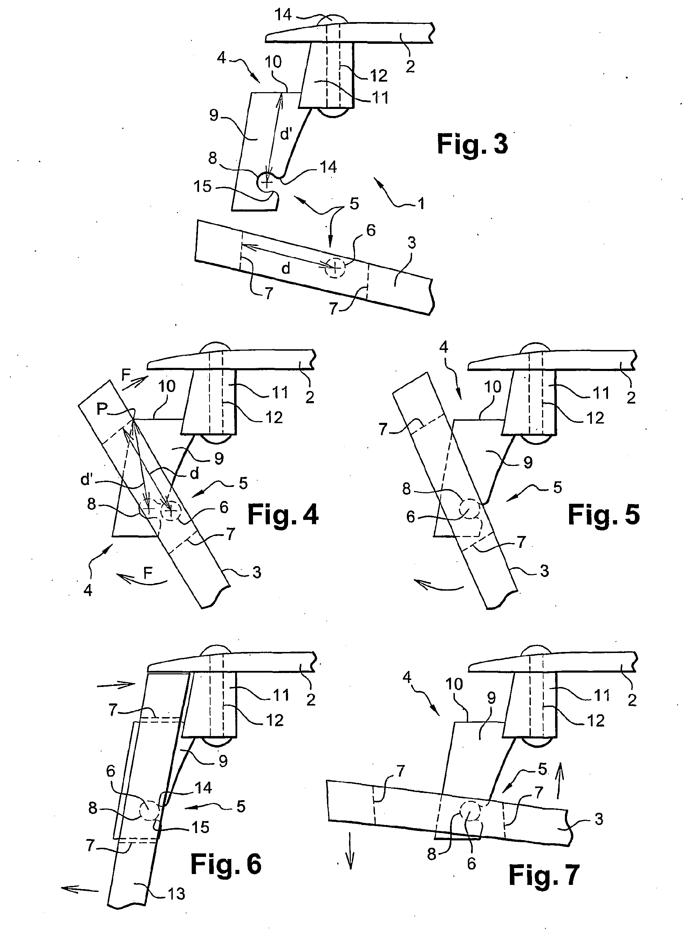

Comme on peut le voir particulièrement bien sur les figures 3 et 4, la distance « d » entre l'axe 6, 6A de la branche 3 et l'extrémité arrière de sa lumière 7, 7A, en direction du tenon 4, est inférieure à celle « d' » entre l'encoche 8, 8A du même tenon 4 et une partie arrière ou talon 10 de celui-ci, lors de la présentation de l'encoche 8, 8A du tenon 4 devant l'axe 6, 6A de la branche 3, en vue de leur encliquetage, de manière à ce que le talon 10 du tenon 4 trouve un appui P dans la zone d'extrémité de la lumière 7, 7A de la branche 3, pour y exercer la force F nécessaire à l'encliquetage et permettre ensuite le libre débattement des éléments entre eux, une fois en position d'utilisation.

Par ailleurs, selon le présent exemple de réalisation, les plots de guidage 9, 9A se prolongent par un taquet 11 globalement parallélépipédique pour constituer conjointement le tenon 4, ledit taquet 11 étant percé de deux trous 12, 13 destinés au passage de deux moyens de fixation 14 sur la façade optique ou solaire 2, directement.

Ce moyen de fixation peut être constitué par un rivet ou par une vis.

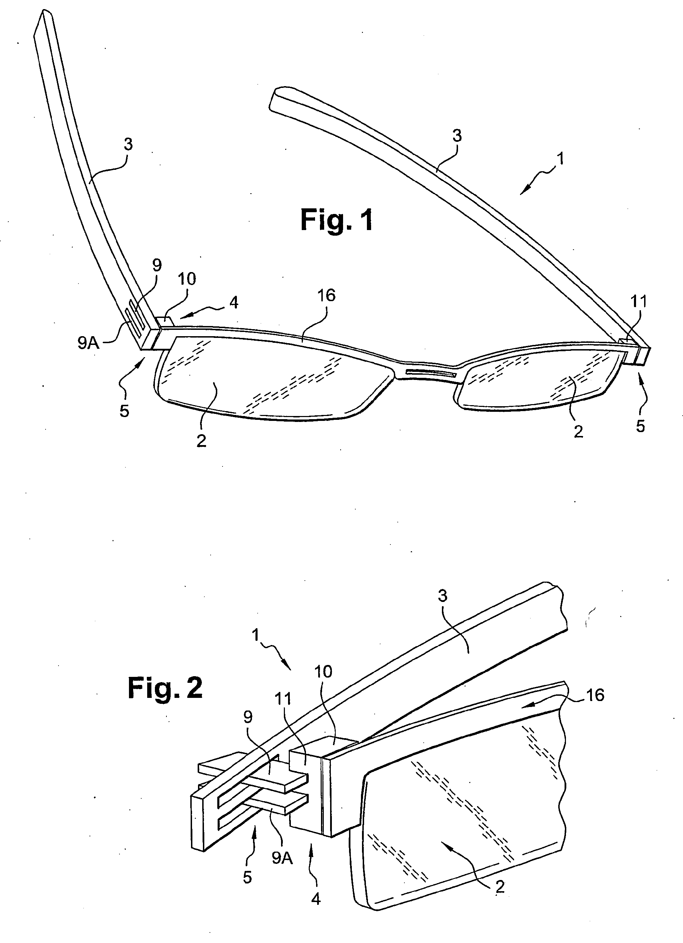

Selon un mode de réalisation représenté sur les figures 1 et 2, les plots de guidage 9, 9A sont issus d'un tenon 4 obtenu au cours d'une même opération de moulage d'une matière plastique avec la monture 16.

Avantageusement, les lumières 7, 7A des branches 3, ainsi que les axes d'articulation 6, 6A qui les traversent, sont obtenus au cours d'une même opération de moulage avec lesdites branches 3.

Selon une autre caractéristique de l'invention, les encoches 8, 8A réalisées sur les plots 9, 9A de guidage du tenon 4 sont constituées par une partie de section circulaire, de diamètre sensiblement égale à celui de l'axe d'articulation 6, 6A de la branche 3 avec lequel il est susceptible de coopérer, et par une partie ouverte délimitée par deux bossages 14, 15, espacés selon une valeur inférieure au diamètre des axes 6, 6A, de manière à obtenir un verrouillage par encliquetage élastique des axes 6, 6A dans les encoches 8, 8A.

Avantageusement, les branches 3 et les tenons 4 sont réalisés en matière plastique.

Préférentiellement, du fait des excellents résultats obtenus, la matière plastique utilisée est de la grilamide, plus généralement de la famille des polyamides.

C'est ainsi que selon l'invention qui vient d'être décrite, les coûts de production ont été notablement diminués pour une meilleure maîtrise des coefficients de frottement des éléments entre eux, ces avantages s'ajoutant au fait que l'articulation s'affranchit des vis, tout en permettant l'interchangeabilité d'une branche cassée, mais également le panachage de couleurs pour marier les couleurs en vue d'une personnalisation des lunettes, voire leur débanalisation.

L'invention pourra donc s'adapter à des lunettes dites à verres percés 2, les tenons 4 se fixant donc directement sur ceux-ci ou alors à des lunettes à monture 16, les tenons 4 seront alors obtenus directement avec ladite monture 16 ou avec les branches 3.

## Revendications

1. Lunettes du type constituées par une façade optique ou solaire (2), soutenue ou non par une monture (16), et comprenant deux branches interchangeables (3), chacune de celles-ci étant reliée à la façade (2) ou à la monture (16) par l'intermédiaire d'un tenon (4) et d'une articulation associée (5), **caractérisée en ce que** l'articulation (5) de chacune des branches (3) est constituée par deux axes (6, 6A), disposés transversalement dans deux lumières longitudinales correspondantes (7, 7A) ménagées à une extrémité d'une branche libre (3), lesquels axes (6, 6A) sont susceptibles d'être encliquetés dans deux encoches (8, 8A), déformables élastiquement, réalisées sur deux plots (9, 9A) issus du tenon (4), de forme et de dimensions sensiblement correspondantes à celles des lumières (7, 7A) de la branche (3), de manière à obtenir un glissement des plots (9, 9A) du tenon (4) dans les lumières (7, 7A) de la branche (3), et assurer complémentairement aux axes d'articulation (6, 6A) proprement dit le guidage de la branche (3) au cours de sa rotation ainsi que son maintien en position stable lorsqu'elle est dépliée, afin d'obtenir une articulation sans vis rendant les branches aisément interchangeables.

2. Lunettes selon la revendication 1, **caractérisées en ce que** les deux axes transversaux (6, 6A) constituant l'articulation (5) sont disposés dans le même alignement, dans les deux lumières longitudinales correspondantes (7, 7A), qui sont identiques et parallèles entre elles, lesquels axes (6, 6A) s'encliquettent élastiquement dans les deux encoches (5, 5A) réalisées sur les deux plots de guidage (9, 9A) identiques et parallèles entre eux, issus du tenon (4), de forme et de dimensions sensiblement correspondantes à celles des deux lumières (7, 7A) de la branche (3) dans lesquelles elles coulissent.

3. Lunettes selon la revendication 2, **caractérisées en ce que** les plots de guidage (9, 9A) du tenon (4) et les lumières correspondantes (7, 7A) des branches (3) sont des parallélépipèdes rectangles dont les dimensions, notamment leurs épaisseurs respectives « e », «e' », ont des valeurs sensiblement égales, avec une tolérance de fabrication telle à obtenir un serrage dit « gras ».

4. Lunettes selon l'une des revendications 1 à 3, **caractérisées en ce que** la distance « d » entre l'axe (6, 6A) de la branche (3) et l'extrémité arrière de sa lumière (7, 7A), en direction du tenon (4), est inférieure à celle « d' » entre l'encoche (8, 8A) du même tenon (4) et une partie arrière ou talon (10) de celui-ci, lors de la présentation de l'encoche (8, 8A) du tenon (4) devant l'axe (6, 6A) de la branche (3), en vue de leur encliquetage, de manière à ce que le talon (10) du tenon (4) trouve un appui (P) dans la zone d'extrémité de la lumière (7, 7A) de la branche (3), pour y exercer la force (F) nécessaire à l'encliquetage et permettre ensuite le libre débattement des éléments entre eux, une fois en position d'utilisation.

5. Lunettes selon l'une des revendications 1 à 4, **caractérisées en ce que** les plots de guidage (9, 9A) se prolongent par un taquet (11) globalement parallélépipédique pour constituer conjointement le tenon (4), ledit taquet (11) étant percé de deux trous (12, 13) destinés au passage de deux moyens de fixation (14) sur la façade optique ou solaire (2), directement.

6. Lunettes selon l'une des revendications 1 à 4, **caractérisées en ce que** les plots de guidage (9, 9A) sont issus d'un tenon (4) obtenu au cours d'une même opération de moulage d'une matière plastique avec la monture (16).

7. Lunettes selon l'une des revendications 1 à 6, **caractérisées en ce que** les lumières (7, 7A) des branches (3), ainsi que les axes d'articulation (6, 6A) qui les traversent, sont obtenus au cours d'une même opération de moulage avec lesdites branches (3).

8. Lunettes selon l'une des revendications 1 à 7, **caractérisées en ce que** les encoches (8, 8A) réalisées sur les plots (9, 9A) de guidage du tenon (4) sont constituées par une partie, de section circulaire, de diamètre sensiblement égale à celui de l'axe d'articulation (6, 6A) de la branche (3) avec lequel il est susceptible de coopérer, et par une partie ouverte délimitée par deux bossages (14, 15), espacés selon une valeur inférieure au diamètre des axes (6, 6A), de manière à obtenir un verrouillage par encliquetage élastique des axes (6, 6A) dans les encoches (8, 8A).

9. Lunettes selon l'une des revendications 1 à 8, **caractérisées en ce que** les branches (3) et les tenons (4) sont réalisés en matière plastique.

## Claims

1. Spectacles of the type consisting of an optical or solar facade (2), which may or may not be supported by a frame (16), and comprising two interchangeable arms (3), each of the latter being connected to the façade (2) or to the frame (16) by means of a tenon (4) and an associated articulation (5), **characterized in that** the articulation (5) of each of the arms (3) consists of two spindles (6, 6A) placed transversely in two matching longitudinal openings (7, 7A) arranged at one end of a free arm (3), the said spindles (6, 6A) being capable of being snap-fitted into two notches (8, 8A), that are elastically deformable, made on two mounts (9, 9A) originating from the tenon (4), with a form and dimensions substantially matching those of the openings (7, 7A) of the arm (3), so as to obtain a sliding of the mounts (9, 9A) from the tenon (4) into the openings (7, 7A) of the arm (3) and to ensure, as a complement to the articulation spindles (6, 6A) themselves, the guidance of the arm (3) during its rotation and its retention in a stable position when it is folded out, in order to obtain a screwless articulation making the arms easily interchangeable.

2. Spectacles according to Claim 1, **characterized in that** the two transverse spindles (6, 6A) forming the articulation (5) are placed in the same alignment, in the two matching longitudinal openings (7, 7A), that are identical and parallel with one another, the said spindles (6, 6A) snap-fitting elastically into the two notches (5, 5A) made on the two guide mounts (9, 9A) that are identical and parallel with one another, originating from the tenon (4), with a shape and dimensions substantially matching those of the two openings (7, 7A) of the arm (3) into which they slide.

3. Spectacles according to Claim 2, **characterized in that** the guide mounts (9, 9A) of the tenon (4) and the matching openings (7, 7A) of the arms (3) are rectangular parallelepipeds whose dimensions, particularly their respective thicknesses "e", "e "', have substantially equal values, with a manufacturing tolerance such as to obtain a "sloppy" tightness.

4. Spectacles according to one of Claims 1 to 3, **characterized in that** the distance "d" between the spindle (6, 6A) of the arm (3) and the rear end of its opening (7, 7A), in the direction of the tenon (4), is less than the distance "d "' between the notch (8, 8A) of the same tenon (4) and a rear portion or heel (10) of the latter, when the notch (8, 8A) of the tenon (4) is presented before the spindle (6, 6A) of the arm (3), for the purpose of snap-fitting them, so that the heel (10) of the tenon (4) finds a bearing (P) in the end zone of the opening (7, 7A) of the arm (3), in order to apply thereto the force (F) necessary for the snap-fitting and subsequently allow the free range of movement of the elements between one another, once in the position of use.

5. Spectacles according to one of Claims 1 to 4, **characterized in that** the guide mounts (9, 9A) are extended by a generally parallelepipedal stop (11) in order to jointly constitute the tenon (4), the said stop (11) being pierced with two holes (12, 13) designed for the passage of two fastening means (14) on the optical or solar façade (2), directly.

6. Spectacles according to one of Claims 1 to 4, **characterized in that** the guide mounts (9, 9A) are originated from a tenon (4) obtained during one and the same moulding operation of a plastic with the frame (16).

7. Spectacles according to one of Claims 1 to 6, **characterized in that** the openings (7, 7A) of the arms (3), and the articulation spindles (6, 6A) which pass through them, are obtained during one and the same moulding operation with the said arms (3).

8. Spectacles according to one of Claims 1 to 7, **characterized in that** the notches (8, 8A) made on the guide mounts (9, 9A) of the tenon (4) consist of a portion of circular section, with a diameter substantially equal to that of the articulation spindle (6, 6A) of the arm (3) with which it is capable of interacting, and of an open portion delimited by two bosses (14, 15), spaced apart by a value less than the diameter of the spindles (6, 6A), in order to obtain a latching by elastic snap-fitting of the spindles (6, 6A) in the notches (8, 8A).

9. Spectacles according to one of Claims 1 to 8, **characterized in that** the arms (3) and the tenons (4) are made of plastic.

## Patentansprüche

1. Brille mit optischen Gläsern oder Sonnengläsern (2), die in einem Gestell (16) gehalten sind oder nicht, und mit zwei austauschbaren Bügeln (3), die beide mit den Gläsern (2) oder dem Gestell (16) mittels eines Mitnehmers (4) und eines zugehörigen Gelenks (5) verbunden sind, **dadurch gekennzeichnet, dass** das Gelenk (5) jedes Bügels (3) mit zwei Achsen (6, 6A) aufgebaut ist, die in zwei entsprechenden Längsausnehmungen (7, 7A) quer angeordnet sind, welche an einem Ende eines freien Bügels (3) ausgebildet sind, wobei die Achsen (6, 6A) in zwei elastisch verformbare Kerben (8, 8A) eingerastet werden können, welche an zwei von dem Mitnehmer (4) ausgehenden Anschlussstücken (9, 9A) ausgebildet sind, deren Form und Abmessungen im Wesentlichen denen der Ausnehmungen (7, 7A) des Bügels (3) entsprechen, so dass die Anschlussstücke (9, 9A) des Mitnehmers (4) in den Ausnehmungen (7, 7A) des Bügels (3) gleiten und ergänzend zu den Gelenkachsen (6, 6A) die Führung des Bügels (3) im Laufe seiner Rotation sicherstellen sowie ihn stabil in Position halten, wenn er ausgeklappt wird, um ein schraubenloses Gelenk zu erhalten, das die Bügel leicht austauschbar macht.

2. Brille nach Anspruch 1, **dadurch gekennzeichnet, dass** die zwei das Gelenk (5) bildenden Querachsen (6, 6A) in den zwei entsprechenden Längsausnehmungen (7, 7A) gleich ausgerichtet angeordnet sind, wobei die Längsausnehmungen identisch und zueinander parallel sind, wobei die von dem Mitnehmer (4) ausgehenden Achsen (6, 6A) in die beiden auf den zwei Führungs-Anschlussstücken (9, 9A) ausgebildeten Kerben (5, 5a) elastisch einrasten, welche identisch und zueinander parallel sind, wobei ihre Form und Abmessungen im Wesentlichen denen der zwei Ausnehmungen (7, 7A) des Bügels (3), in welchem sie gleiten, entsprechen.

3. Brille nach Anspruch 2, **dadurch gekennzeichnet, dass** die Führungs-Anschlussstücke (9, 9A) des Mitnehmers (4) und die entsprechenden Ausnehmungen (7, 7A) der Bügel (3) rechteckige Parallelepipede bilden, deren Abmessungen, insbesondere deren jeweilige Dicken "e", "e'" im Wesentlichen gleiche Werte haben, mit einer Herstellungstoleranz, um eine gute Klemmung zu erhalten.

4. Brille nach einem der Ansprüche 1 bis 3, **dadurch gekennzeichnet, dass** der Abstand "d" zwischen der Achse (6, 6A) des Bügels (3) und dem hinteren Ende seiner Ausnehmung (7, 7A) in Richtung des Mitnehmers (4) kleiner ist als der Abstand "d'" zwischen der Kerbe (8, 8A) desselben Mitnehmers (4) und eines hinteren Teils oder Absatzes (10) des Mitnehmers (4), wenn die Kerbe (8, 8A) des Mitnehmers (4) zum Einrasten des Mitnehmers (4) vor der Achse (6, 6A) des Bügels (3) ist, so dass der Absatz (10) sich in einer Endzone der Ausnehmung (7, 7A) des Bügels (3) abstützt (P), um dort die Kraft (F) auszuüben, die für das Einrasten notwendig ist, und in Folge die freie Auslenkung der Elemente untereinander erlaubt, wenn sie in ihrer Gebrauchsposition sind.

5. Brille nach einem der Ansprüche 1 bis 4, **dadurch gekennzeichnet, dass** die Führungs-Anschlussstücke (9, 9A) durch einen im Wesentlichen parallelepiped-förmigen Riegel (11) verlängert sind, um insgesamt den Mitnehmer (4) zu bilden, wobei der Riegel (11) von zwei Bohrungen (12, 13) durchsetzt ist, die für den Durchtritt von zwei Befestigungsmitteln (14) direkt an den optischen Gläsern oder Sonnengläsern (2) bestimmt sind.

6. Brille nach einem der Ansprüche 1 bis 4, **dadurch gekennzeichnet, dass** die Führungs-Anschlussstücke (9, 9A) von dem Mitnehmer (4) ausgehen, der im Laufe eines einzigen Formungsprozesses eines Kunststoffmaterials mit dem Gestell (16) erhalten wird.

7. Brille nach einem der Ansprüche 1 bis 6, **dadurch gekennzeichnet, dass** die Ausnehmungen (7, 7A) der Bügel (3) sowie die Gelenkachsen (6, 6A), welche durch sie hindurchgehen, im Laufe eines einzigen Formungsprozesses mit den Bügeln (3) erhalten werden.

8. Brille nach einem der Ansprüche 1 bis 7, **dadurch gekennzeichnet, dass** die Kerben (8, 8A), die an den Führungs-Anschlussstücken (9, 9A) des Mitnehmers (4) ausgebildet sind, teilweise mit kreisförmigen Querschnitt ausgebildet sind, wobei der Durchmesser im Wesentlichen gleich dem Durchmesser der Gelenkachse (6, 6A) des Bügels (3) ist, mit dem sie zusammenwirken, und teilweise offen sind, wobei die Öffnung durch zwei Dome (14, 15) begrenzt ist, deren Abstand geringer ist als der Durchmesser der Achse (6, 6A), um eine Verriegelung durch elastisches Einrasten der Achse (6, 6A) in die Kerben (8, 8A) zu erhalten.

9. Brille nach einem der Ansprüche 1 bis 8, **dadurch gekennzeichnet**, das die Bügel (3) und die Mitnehmer (4) aus Kunststoff hergestellt sind.
